# EUROPEAN PATENT APPLICATION

(11) **EP 4 769 738 A1**
(43) Date of publication of application: **01.07.2026**
(21) Application number: 24891744.5
(22) Date of filing: 12.11.2024
(51) Int. Cl.: H01M 50/289, H01M 10/658, H01M 50/211, H01M 50/249

(54) **BATTERY PACK COMPRISING BLOCK TYPE PARTITION**

(30) Priority: 15.11.2023 KR 20230158390
(71) Applicant: LG Energy Solution, Ltd., Seoul 07335 (KR)
(72) Inventor: LEE, Gi Hwan, Daejeon 34122 (KR); CHO, Seung Jae, Daejeon 34122 (KR); LEE, Chungho, Daejeon 34122 (KR); KIM, Jongjin, Daejeon 34122 (KR)
(74) Representative: Hoffmann Eitle
(86) International application number: PCT/KR2024/017816
(87) International publication number: WO 2025/105798

(57) **Abstract**

The present invention provides a structure of A battery pack including: a plurality of battery modules arranged in widthwise direction to be spaced apart from one another, wherein each of the plurality of battery modules are provided with one or more flanges extending from one widthwise end or two widthwise ends thereof; a pack frame provided with side walls and a bottom plate and accommodating the plurality of battery modules; and a plurality of blocks extending in upward direction from the bottom plate and having the one or more flanges fixed thereto, wherein the plurality of battery modules includes a first module and a second module adjacent to each other, the first module and the second module provided with a first flange and a second flange, respectively, and the plurality of blocks includes a first block and a second block disposed between the first module and the second module.

## Description

### [TECHNICAL FIELD]

This application claims the benefit of priority based on Korean Patent Application No. 10-2023-0158390 filed on November 15, 2023, entire content disclosed in the document of the patent applications is included as a part of this specification.

The present invention relates to a structure of a battery pack capable of preventing thermal propagation between modules. More specifically, the present invention relates to a structure of a battery pack including: a battery module provided with a flange; and a partition to which the flange is fastened capable of preventing thermal propagation by the flange and the partition.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. Additionally, a plurality of such battery modules may be integrated to constitute a battery pack with higher output and larger capacity.

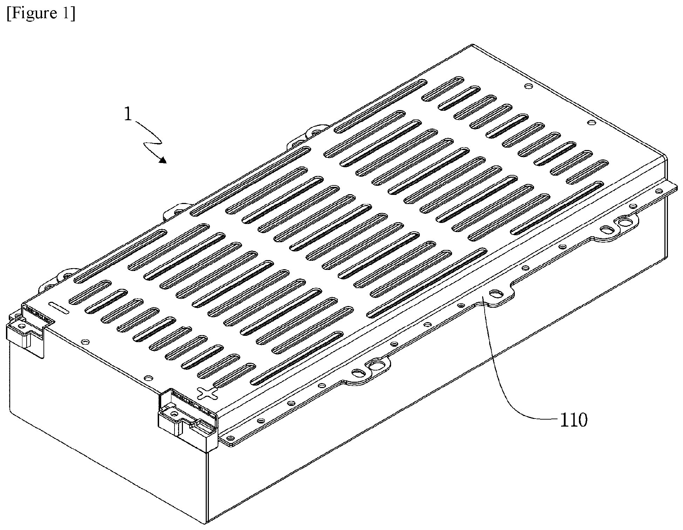

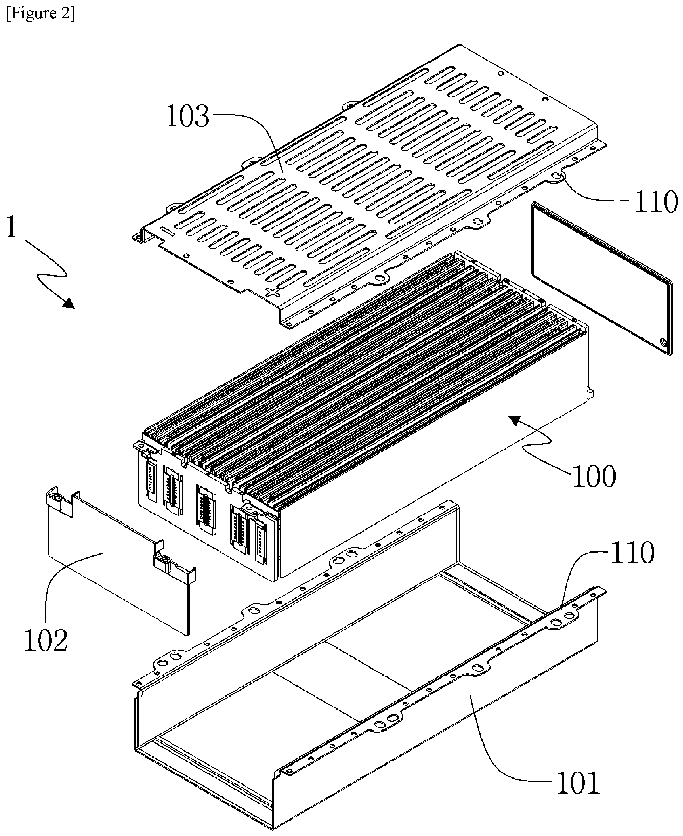

FIGS. 1 and 2 illustrate a structure of a battery module provided with a flange. Referring to FIGS. 1 and 2, a battery module 1 includes a cell laminate 100, in which a plurality of pouch-type battery cells are laminated, accommodated in a housing provided with a flange 110. The housing may include a U-frame 101, an end plate 102, and a top plate 103, and the flange 110 may include a lower flange and an upper flange extending in widthwise direction from the U-frame 101 and the top plate 103, respectively.

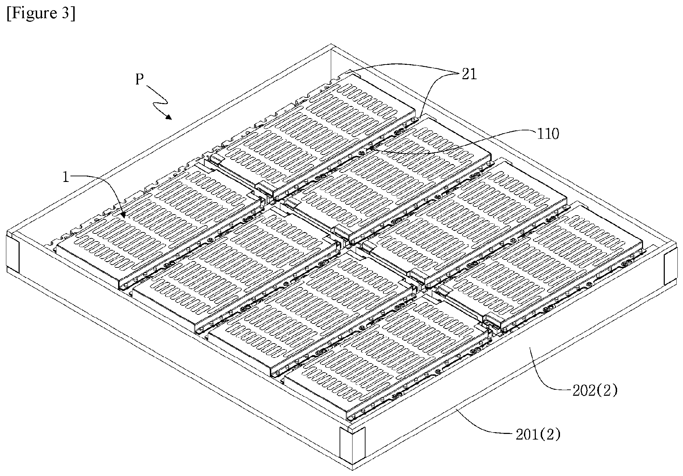

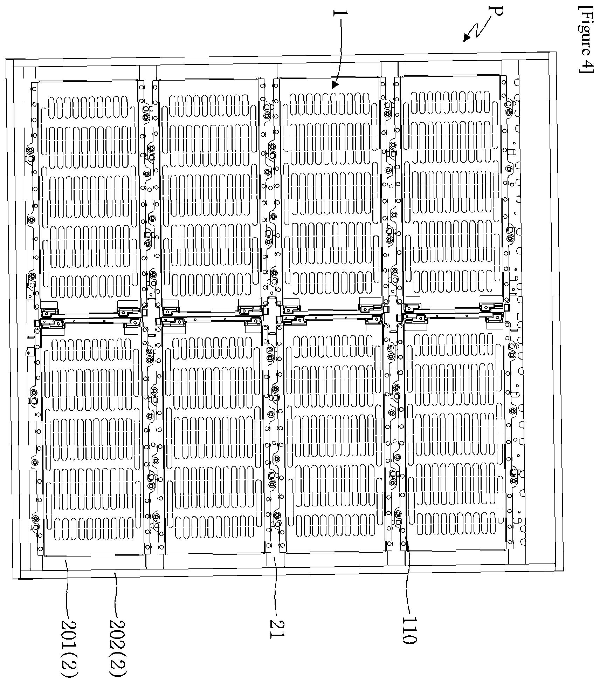

FIGS. 3 and 4 illustrate a structure of a conventional battery pack having a partition to which a flange is fastened. Referring to FIGS. 3 and 4, the battery pack P includes a plurality of battery modules 1 accommodated in a pack frame 2 having a partition 21. The partition 21 divides the space where the battery modules 1 are disposed, and the flange 110 is fastened to the partition 21 to fix the battery modules 1 to the pack frame 2 without movement.

Meanwhile, the cell laminate 100 may ignite due to a short circuit, etc. Here, high-temperature gas and flame generated from the cell laminate 100 may increase the temperature of the housing.

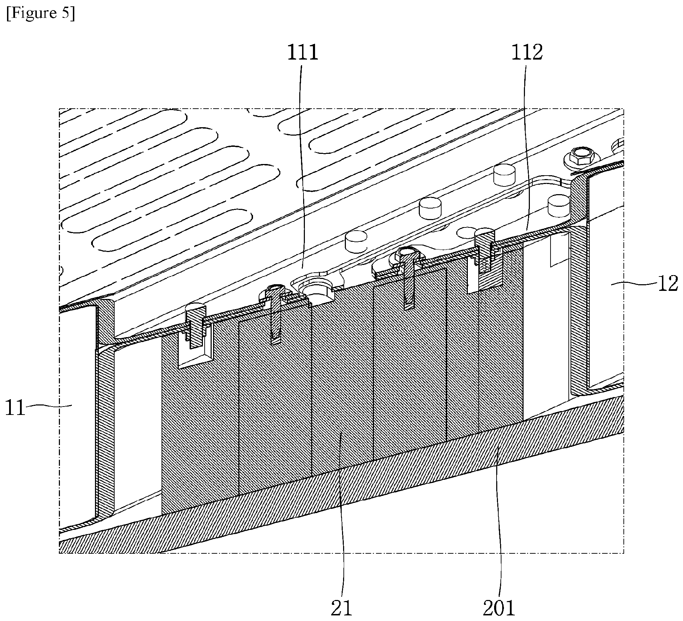

FIG. 5 illustrates a cross-section of the battery pack of FIG. 3. Referring to FIG. 5, heat energy from ignition of the battery module 1 may be transferred to the pack frame 2 and the flange of another battery module through the partition 21 and the flange 110 fastened thereto. In such case, there is a risk of thermal runway at the pack level due to thermal propagation between the battery modules caused by a serial ignition.

Therefore, a structure capable of preventing thermal propagation between battery modules through partition while firmly fixing the battery module to the pack frame by fastening the flange to the partition is necessary.

### [DISCLOSURE]

### [TECHNICAL PROBLEM]

In order to solve above-described problems of the prior art, it is an object of the present invention to provide a structure of a battery pack capable of preventing thermal runaway at the pack level caused by thermal propagation between modules.

Specifically, it is an object of the present invention to provide a structure of a battery pack including: a battery module provided with a flange; and a pack frame to which the flange is fastened, and capable of preventing thermal propagation by the flange and the partition.

It is another object of the present invention to provide a structure of a battery pack capable of preventing thermal propagation between modules caused by convection.

It is yet another object of the present invention to provide a structure of a battery pack and a structure of a vehicle including the same wherein thermal propagation between modules is prevented while the battery module being firmly fixed to the pack frame.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-describe problems, the present invention provides a structure of A battery pack including: a plurality of battery modules arranged in widthwise direction to be spaced apart from one another, wherein each of the plurality of battery modules are provided with one or more flanges extending from one widthwise end or two widthwise ends thereof; a pack frame provided with side walls and a bottom plate and accommodating the plurality of battery modules; and a plurality of blocks extending in upward direction from the bottom plate and having the one or more flanges fixed thereto, wherein the plurality of battery modules includes a first module and a second module adjacent to each other, the first module and the second module provided with a first flange and a second flange, respectively, the plurality of blocks includes a first block and a second block disposed between the first module and the second module, the first block supports the first flange without being in contact with the second flange, and the second block supports the second flange without being in contact with the first flange.

Since the first module and the second module are respectively supported by the first block and the second block which are not in contact with each other, the battery module may be stably supported on the pack frame while preventing thermal propagation between the battery modules through the flange.

Here, the bottom surface of at least one of the plurality of battery modules may be spaced apart from the bottom plate above the bottom plate. Alternatively, an insulating material may be interposed between a bottom surface of at least one of the plurality of battery modules and the bottom plate. As a result, heat conduction from the battery module to the bottom plate may be minimized, and thermal propagation between the modules through the bottom plate may also be prevented.

The first block and the second block may be juxtaposed in widthwise direction. That is, the first block and the second block may be arranged to be spaced apart from each other by a predetermined distance in widthwise direction wherein the first block may be disposed closer to the first module, and the second block may be disposed closer to the second module. Here, each of the first block and the second block may be a single member extending in lengthwise direction, or may include a plurality of members arranged in lengthwise direction.

Alternatively, a plurality of first blocks and a plurality of second block may be arranged in lengthwise direction. Here, the first block and the second block may be alternately arranged in lengthwise direction or the plurality of first blocks and the plurality of second block may be alternately arranged in lengthwise direction. Here, the first flange and the second flange may extend in widthwise direction at different positions along the lengthwise direction and the first block and the second block may be fastened to the first flange and the second flange, respectively.

The pack frame may include a heat-resistant isolating member supported by the first block and the second block and isolating the first module and the second module in widthwise direction. Preferably, the isolating member may cover two widthwise ends of each of the first block and the second block. As the isolating member is provided, thermal propagation due to convection between the first module and the second module may be prevented.

A portion of the isolating member may be interposed between the one or more flanges and the plurality of blocks. As a result, heat conduction from the flange to the block may be delayed or prevented.

The isolating member according to an embodiment of the present invention may cover an upper end and two widthwise ends of each of the first block and the second block. That is, the isolating member may include a box-shaped member having two lengthwise ends and a lower portion that are substantially open to cover the first block and the second block.

The isolating member according to an embodiment of the present invention may include a material containing mica.

The plurality of blocks may include a third block supporting the isolating member without being in contact with the one or more flanges. The third block may support the isolating member without exchanging heat with the first flange and the second flange, thereby improving the structural stability of the isolating member.

Here, the third block may be arranged along with the first block and the second block in lengthwise direction.

The battery module may include an outermost module disposed adjacent to the first widthwise end of the side wall, the outermost module provided with an outermost flange extending toward the second widthwise end of the side wall, and the plurality of blocks may include a predetermined fourth block disposed between the outermost module and the side wall, the fourth block supporting the outermost flange and spaced apart from the side wall in widthwise direction. Since the outermost module is supported by the fourth block without being in contact with the side wall, thermal propagation between the outermost modules through the side wall may be prevented.

Here, in order to prevent thermal propagation between the outermost modules through the fourth block, it is preferable that the fourth block is in contact with only one of the plurality of battery modules.

The fourth block may be a single member extending in lengthwise direction, or may include a plurality of members arranged in lengthwise direction.

The pack frame may include a heat-resistant isolating member supported by the fourth block and isolating the outermost module and the side wall in widthwise direction. Preferably, the isolating member may cover two widthwise ends of the fourth block. As the isolating member is provided, thermal propagation due to convection between the outermost module and the side walls may be prevented.

A portion of the isolating member may be interposed between the one or more flange and the plurality of blocks. Accordingly, heat conduction from the flange to the block may be delayed or prevented.

The isolating member according to an embodiment of the present invention may cover the upper end and the two widthwise ends of the fourth block. That is, the isolating member may include a box-shaped member having two lengthwise ends and a lower portion that are substantially open to cover the fourth block.

The isolating member according to an embodiment of the present invention may include a material containing mica.

The plurality of blocks may include a fifth block supporting the isolating member without being in contact with the outermost flange. The fifth block may support the isolating member without exchanging heat with the outermost flange, thereby improving the structural stability of the isolating member.

Here, the fifth block may be arranged together with the fourth block in lengthwise direction.

The present invention also provides a structure of a vehicle including the battery pack. The battery pack may be built into the vehicle as a power source. The vehicle may be an electric vehicle or a hybrid vehicle. The vehicle may be a two-wheeled vehicle or a four-wheeled vehicle. However, the structure of the vehicle is not limited thereto, and the battery pack does not necessarily have to serve as a power source of the vehicle.

### [ADVANTAGEOUS EFFECTS]

The present invention provides a structure of a battery pack capable of preventing thermal runaway at the pack level caused by thermal propagation between modules.

Specifically, the present invention provides a structure of a battery pack including: a battery module provided with a flange; and a pack frame to which the flange is fastened, wherein thermal propagation by the flange and the partition is prevented by providing separate blocks to which the flanges are fastened, respectively.

In addition, the present invention provides a structure of a battery pack capable of preventing thermal propagation between modules caused by convection by providing an isolating member that isolates spaces in which battery modules are disposed.

The present invention to provide a structure of a battery pack and a structure of a vehicle including the same wherein thermal propagation between modules is prevented while the battery module being firmly fixed to the pack frame.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a structure of a battery module provided with a flange.
FIGS. 3 and 4 illustrate a structure of a conventional battery pack having a partition to which a flange is fastened, and FIG. 5 illustrates a cross-section thereof.
FIGS. 6 and 7 illustrate exterior and a cross-section thereof of a battery pack according to an embodiment of the present invention.
FIG. 8 illustrates an arrangement of blocks according to an embodiment of the present invention.
FIG. 9 illustrates a first module fastened to a pack frame according to an embodiment of the present invention.
FIG. 10 illustrates a second module fastened to a pack frame according to an embodiment of the present invention.
FIGS. 11 and 12 illustrate a battery module fastened to a pack frame and enlarged view thereof, respectively, according to an embodiment of the present invention.
FIGS. 13 and 14 illustrate an arrangement of an isolating member according to an embodiment of the present invention.
FIG. 15 illustrates a cross-section of a battery pack according to an embodiment of the present invention.
FIG. 16 illustrates a vehicle including a battery pack according to an embodiment of the present invention.

### [DESCRIPTION OF REFERENCE NUMERALS]

1: battery module
   100: cell laminate
   101: U-frame
   102: end plate
   103: top plate
   110: flange
   11: first module
      111: first flange
   12: second module
      112: second flange
   14: outermost module
      114: outermost flange
2: pack frame
   201: bottom plate
   202: side wall
   21: partition
      210: block
         211: first block
         212: second block
         213: third block
         214: fourth block
      215: isolating member
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention provides a structure of a battery pack, including: a plurality of battery modules provided with flanges; and a pack frame accommodating the plurality of battery modules and provided with a partition having the flanges fastened thereto and isolating a space where the plurality of battery modules are disposed, thereby preventing thermal propagation between the battery modules through the pack frame.

Hereinafter, preferred embodiments of the present invention will be described with reference to the accompanying drawings.

### [STRUCTURE OF BATTERY MODULE]

Hereinafter, with reference to FIGS. 1 and 2, a structure of a battery module provided with a flange and embedded in a battery pack according to an embodiment of the present invention will be described in detail.

FIGS. 1 and 2 illustrate a structure of a battery module provided with a flange. Referring to FIGS. 1 and 2, a battery module 1 according to an embodiment of the present invention may be provided with a flange 110 extending from one widthwise end or two widthwise ends thereof.

The battery module 1 may include: a cell laminate 100 in which a plurality of pouch-type battery cells are laminated; and a housing accommodating the cell laminate 100. However, the type of the battery in the battery module 1 according to the present invention is not limited thereto.

The housing may include: a U-frame 101 that accommodates the cell laminate 100; a pair of end plates 102 that cover two lengthwise ends of the U-frame 101; and a top plate 103 that covers the upper portion of the U-frame 101, and the flange 110 may include a lower flange extending from the U-frame 101 and an upper flange extending from the top plate 103. However, the structures and positions of the housing and the flange 110 according to the present invention are not limited thereto.

A plurality of battery modules 1 may be integrated in the pack frame to form one battery pack.

### [GENERAL STRUCTURE OF BATTERY PACK]

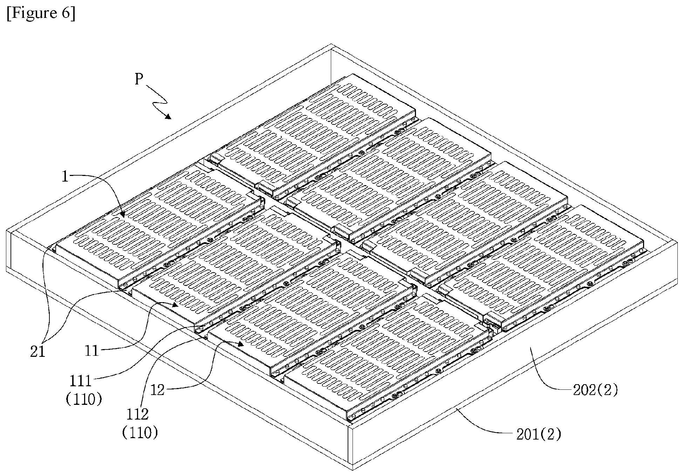

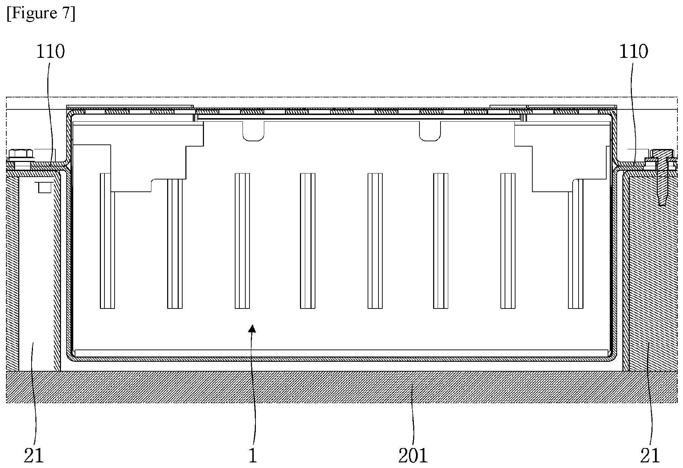

Hereinafter, with reference to FIGS. 6 and 7, a general structure of a battery pack having a partition according to an embodiment of the present invention will be described.

FIG. 6 illustrates an exterior of a battery pack according to an embodiment of the present invention. Referring to FIG. 6, a battery pack P according to an embodiment of the present invention may include a plurality of battery modules 1 arranged in widthwise direction and a pack frame 2 accommodating the plurality of battery modules 1. The pack frame 2 may include a bottom plate 201 and side walls 202.

The pack frame 2 may include a partition 21 that divides a space where the battery modules 1 are disposed. The partition 21 extends between the battery modules 1 in lengthwise direction and isolates the battery modules 1 from one another in widthwise direction.

Here, the battery modules 1 may be firmly fixed to the pack frame 2 by fastening the flange 110 to the partition 21.

The battery modules 1 may include a first module 11 and a second module 12 that are adjacent to each other in widthwise direction.

The first module 11 may be provided with a first flange 111 extending in widthwise direction, and the second module 12 may be provided with a second flange 112 extending opposite to the extending direction of the first flange 111. The first flange 111 and the second flange 112 may be supported by the partition 21 provided between the first module 11 and the second module 12.

FIG. 7 illustrates a cross-section of the battery pack of FIG. 6 according to an embodiment of the present invention. Referring to FIG. 7, the battery module 1 according to an embodiment of the present invention may be provided with the flanges 110 extending in directions opposite to each other along widthwise direction. The bottom surface of the battery module 1 may be spaced apart from the bottom plate 201 in upward direction as the partitions 21 provided at the two widthwise ends of the battery module 1 supports the flanges 110 from thereunder. Here, an insulating material (not shown) may be provided between the bottom surface of the battery module 1 and the bottom plate 201. As a result, thermal propagation between the battery modules 1 caused by heat conduction through the bottom plate 201 may be prevented.

### [BLOCK STRUCTURE OF PARTITION]

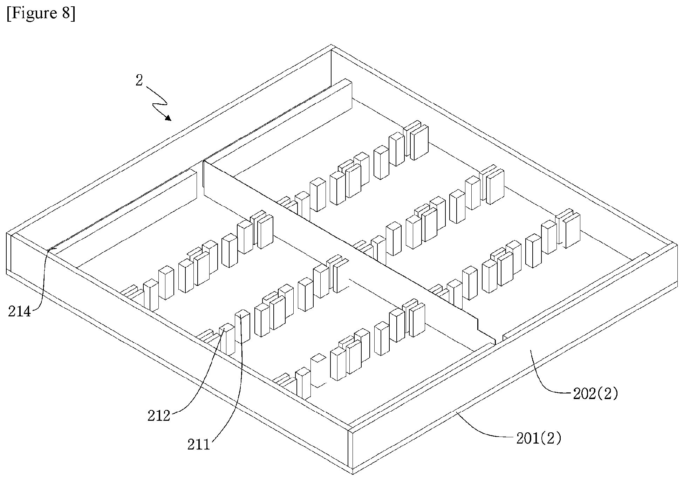

Hereinafter, with reference to FIGS. 8 to 14, a structure of the partition constituting the battery pack according to an embodiment of the present invention will be described in detail.

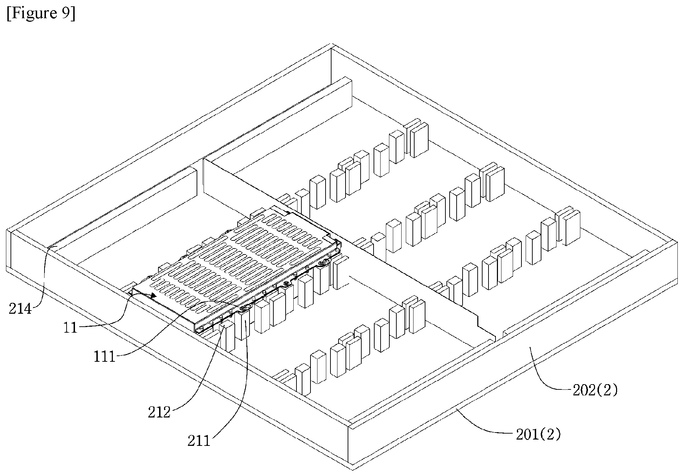

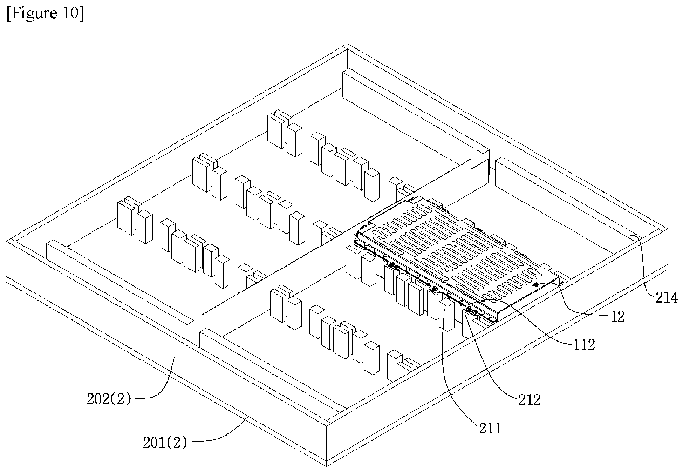

FIG. 8 illustrates an arrangement of blocks according to an embodiment of the present invention, and FIGS. 9 and 10 illustrate the first module and the second module fastened to the pack frame, respectively, according to an embodiment of the present invention. Referring to FIGS. 8 to 10, the partition 21 may include a plurality of blocks 210. The blocks 210 may include a first block 211 that supports the first module 11 without being in contact with the second module 12, and a second block 212 that supports the second module 12 without being in contact with the first module 11.

The first block 211 and the second block 212 may be juxtaposed in widthwise direction, or a plurality of first blocks 211 and a plurality of second blocks 212 may be arranged in lengthwise direction. According to an embodiment of the present invention, a plurality of first blocks 211 and a plurality of second blocks 212 may be alternately arranged in lengthwise direction.

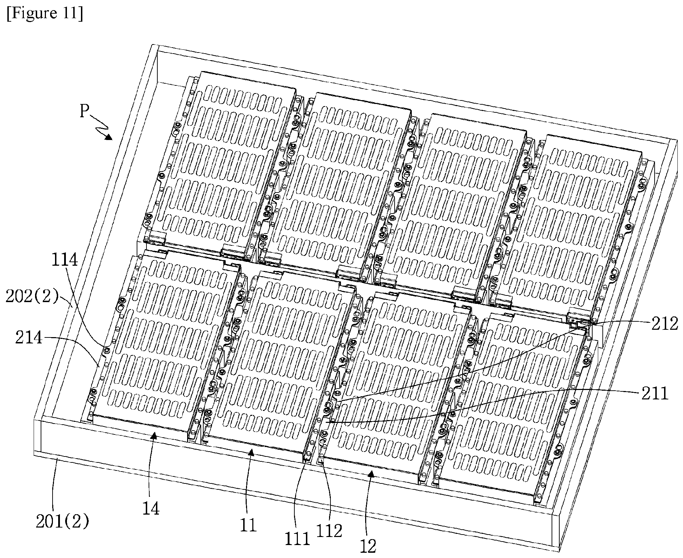

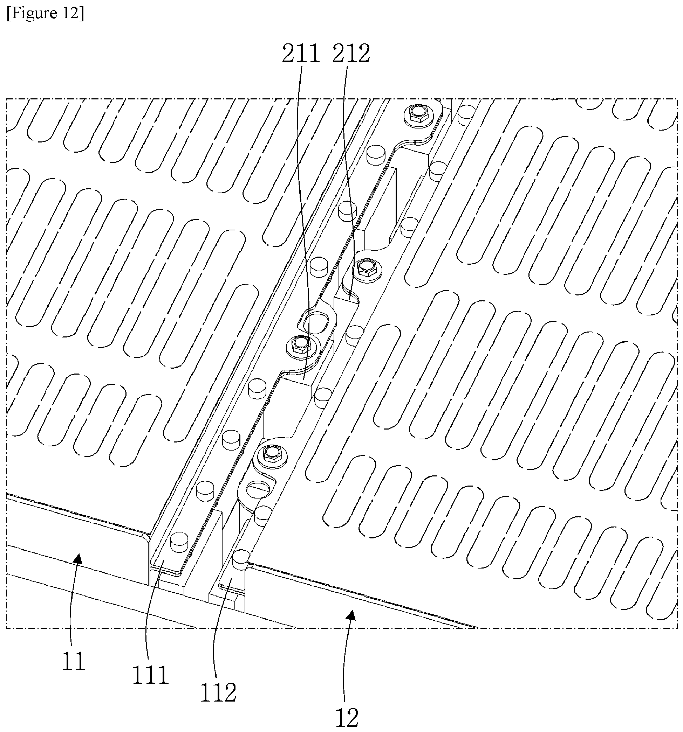

FIGS. 11 and 12 illustrate a battery module fastened to a pack frame and enlarged view thereof, respectively, according to an embodiment of the present invention. Referring to FIGS. 11 and 12, the first flange 111 and the second flange 112 according to an embodiment of the present invention may be disposed along the lengthwise direction and extend from different positions to be in contact with the first block 211 and the second block 212, respectively. As the first flange 111 and the second flange 112 are respectively fastened to the first block 211 and the second block 212 which are separated from each other, the first flange 111 and the second flange 112 may be fixed to the pack frame 2 while preventing thermal propagation between the battery module 1 through the flange 110 and the partition 21.

Referring back to FIG. 11, the plurality of battery modules 1 may include a predetermined outermost module 14 adjacent to the side wall 202. The outermost module 14 may have an outermost flange 114 extending toward the side wall 202.

The block 210 may include a fourth block 214 arranged between the outermost module 14 and the side wall 202. The fourth block 214 may support the outermost flange 114 while being spaced apart from the side wall 202 in widthwise direction. Accordingly, thermal propagation between the outermost modules 14 through the side wall 202 may be prevented.

Here, in order to prevent thermal propagation between the outermost modules 14 through the fourth block 214, it is preferable that one fourth block 214 is in contact with one battery module 1.

The fourth blocks 214 may be a single member extending in lengthwise direction, or may include a plurality of members arranged in lengthwise direction.

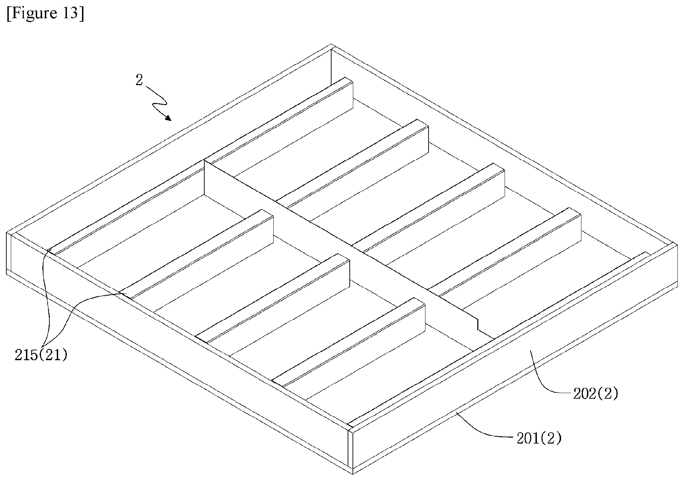

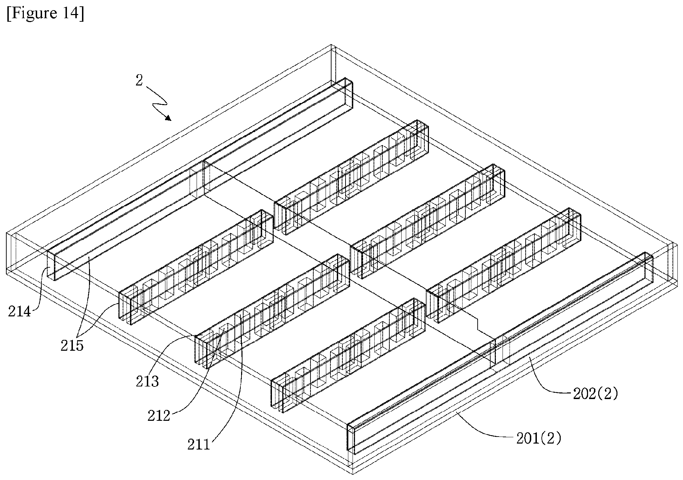

FIGS. 13 and 14 illustrate an arrangement of an isolating member according to an embodiment of the present invention. Referring to FIGS. 13 and 14, the partition 21 may include a heat-resistant isolating member 215 supported by the blocks 210 and isolating a space in widthwise direction where the battery module 1 is accommodated. The isolating member 215 according to an embodiment of the present invention may include a mica material.

Preferably, the isolating member 215 may cover two widthwise ends of the first block 211 and the second block 212 between the first module 11 and the second module 12, and may cover two widthwise ends of the fourth block 214 between the outermost module 14 and the side wall 202. As the isolating member 215 is provided, thermal propagation due to convection between the battery modules 1 may be prevented.

The isolating member 215 may be interposed between the flange 110 and the block 210. Accordingly, thermal conduction between the flange 110 and the block 210 may be delayed or prevented.

The isolating member 215 according to an embodiment of the present invention constitutes the upper surface and two widthwise end surfaces of the partition 21 and includes mica material, and one isolating member 215 may be provided for each partition 21.

Between the first module 11 and the second module 12, a third block 213 that supports the isolating member 215 without being in contact with the flange 110 may be provided. In addition, between the outermost module 14 and the side wall 202, a fifth block (not shown) that supports the isolating member 215 without being in contact with the flange 110 may be provided. As the third block 213 and/or the fifth block are provided, heat is not conducted by the partition 21 between the flanges 110 while stable support is provided for the isolating member 215.

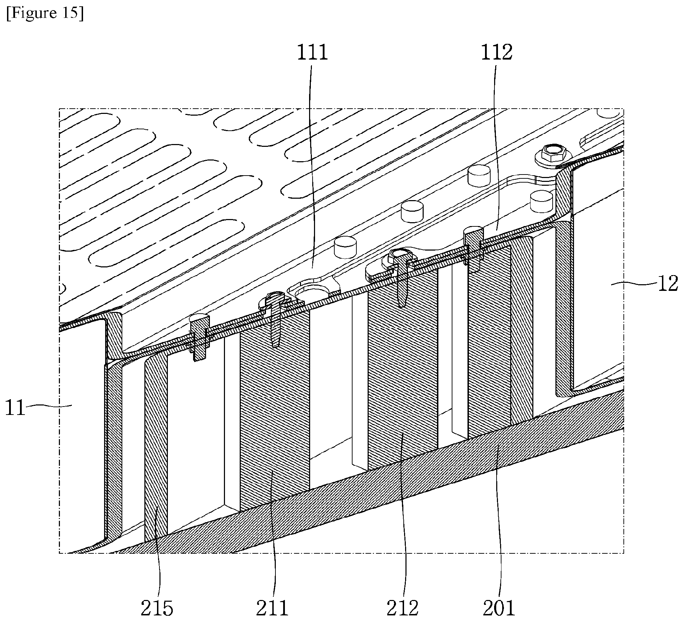

FIG. 15 illustrates a cross-section of a battery pack according to an embodiment of the present invention. Referring to FIG. 15, in the battery pack P according to an embodiment of the present invention, the first flange 111 extending from the first module 11 is fastened to the first block 211 with the isolating member 215 therebetween, and the second flange 112 extending from the second module 12 is fastened to the second block 212 with the isolating member 215 therebetween such that little heat is conducted between the first flange 111 and the second flange 112.

### [VEHICLE INCLUDING BATTERY PACK]

The present invention also provides a structure of a vehicle including the battery pack P.

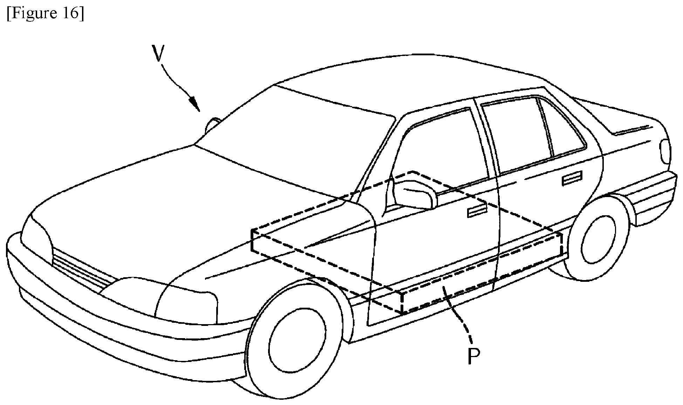

Hereinafter, with reference to FIG. 16, a structure of a vehicle including a battery pack according to an embodiment of the present invention will be described.

FIG. 16 illustrates a vehicle including a battery pack according to an embodiment of the present invention. Referring to FIG. 16, the battery pack P may be built into a vehicle V as a power source. The vehicle V may be a hybrid vehicle or an electric vehicle, but is not limited thereto. In addition, the vehicle V may be a two-wheeled vehicle or a four-wheeled vehicle, but is not limited thereto.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a plurality of battery modules arranged in widthwise direction to be spaced apart from one another, wherein each of the plurality of battery modules are provided with one or more flanges extending from one widthwise end or two widthwise ends thereof;
a pack frame provided with side walls and a bottom plate and accommodating the plurality of battery modules; and
a plurality of blocks extending in upward direction from the bottom plate and having the one or more flanges fixed thereto,
wherein the plurality of battery modules comprises a first module and a second module adjacent to each other, the first module and the second module provided with a first flange and a second flange, respectively,
the plurality of blocks comprises a first block and a second block disposed between the first module and the second module,
the first block supports the first flange without being in contact with the second flange, and
the second block supports the second flange without being in contact with the first flange.

2. The battery module of claim 1, wherein a bottom surface of at least one of the plurality of battery modules is spaced apart from the bottom plate above the bottom plate.

3. The battery module of claim 1, wherein an insulating material is interposed between a bottom surface of at least one of the plurality of battery modules and the bottom plate.

4. The battery module of claim 1, wherein the first block and the second block are juxtaposed in widthwise direction.

5. The battery module of claim 4, wherein a plurality of first blocks and a plurality of second block are arranged in lengthwise direction.

6. The battery module of claim 1, wherein a plurality of first blocks and a plurality of second block are arranged in lengthwise direction.

7. The battery module of claim 6, wherein the first block and the second block are alternately arranged in lengthwise direction or the plurality of first blocks and the plurality of second block are alternately arranged in lengthwise direction.

8. The battery module of claim 1, further comprising: a heat-resistant isolating member supported by the first block and the second block and isolating the first module and the second module in widthwise direction.

9. The battery module of claim 8, wherein the isolating member covers two widthwise ends of each of the first block and the second block.

10. The battery module of claim 8, wherein a portion of the isolating member is interposed between the one or more flanges and the plurality of blocks.

11. The battery module of claim 8, wherein the isolating member covers an upper end and two widthwise ends of each of the first block and the second block.

12. The battery module of claim 8, wherein the plurality of blocks comprises a third block supporting the isolating member without being in contact with the one or more flanges.

13. The battery module of claim 12, wherein the third block is arranged along with the first block and the second block in lengthwise direction.

14. The battery module of claim 1, wherein the battery module comprises an outermost module disposed adjacent to one widthwise end of the side wall, the outermost module provided with an outermost flange extending toward the side wall, and
the plurality of blocks includes a fourth block disposed between the outermost module and the side wall, the fourth block supporting the outermost flange and spaced apart from the side wall in widthwise direction.

15. The battery module of claim 14, wherein the fourth block is in contact with only one of the plurality of battery modules.

16. The battery module of claim 14, wherein a plurality of fourth blocks are arranged in lengthwise direction.

17. The battery module of claim 14, further comprising: a heat-resistant isolating member supported by the fourth block and isolating the outermost module and the side wall in widthwise direction.

18. The battery module of claim 17, wherein the isolating member covers two widthwise ends of the fourth block.

19. The battery module of claim 17, wherein a portion of the isolating member is interposed between the one or more flange and the plurality of blocks.

20. The battery module of claim 17, wherein the isolating member covers an upper end and two widthwise ends of the fourth block.

21. The battery module of claim 16, further comprising: a heat-resistant isolating member supported by the fourth block and isolating the outermost module and the side wall in widthwise direction, and
the plurality of blocks comprises a fifth block supporting the isolating member without being in contact with the one or more flange.

22. A vehicle comprising a battery pack of any one of claims 1 to 21.
